# EUROPEAN PATENT SPECIFICATION

(11) **EP 1 349 351 B1**
(45) Date of publication and mention of the grant of the patent: **20.08.2008**
(21) Application number: 03007320.9
(22) Date of filing: 31.03.2003
(51) Int. Cl.: H04M 1/247, H04M 1/725, G06F 3/033

(54) **Apparatus and method for configuring and displaying user interface in mobile communication terminal**
Vorrichtung und Verfahren zur Konfigurierung und Anzeige einer Benutzerschnittstelle in einem Mobilkommunikationsendgerät
Dispositif et méthode de configuratiion et d'affichage d'un interface d'utilisateur dans un appareil de communication mobile

(30) Priority: 30.03.2002 KR 2002017670
(43) Date of publication of application: 01.10.2003
(73) Proprietor: SAMSUNG ELECTRONICS CO., LTD., Suwon-City, Kyungki-do (KR)
(72) Inventor: Young, Su-Jung, Paldal-gu, Suwon-city, Kyungki-do (KR); Hwang, Byeong-Cheol, Paldal-gu, Suwon-city, Kyungki-do (KR); Kim, Bong-Hee, Paldal-gu, Suwon-city, Kyungki-do (KR); Ha, Jung-Mee, Paldal-gu, Suwon-city, Kyungki-do (KR); Kim, Sung-Jun, Paldal-gu, Suwon-city, Kyungki-do (KR); Choi, Hwan-Seog, Paldal-gu, Suwon-city, Kyungki-do (KR)
(74) Representative: Grünecker, Kinkeldey, Stockmair & Schwanhäusser Anwaltssozietät

(56) References cited:
- EP-A- 0 604 964
- EP-A- 1 028 570
- WO-A-01/61443
- WO-A-01/62018

## Description

The present invention relates to an apparatus and method for displaying a user interface, and more particularly to an apparatus and method for displaying a user interface in a mobile communication terminal.

Conventionally, a user interface was first provided in order to provide users operating predetermined equipment with increased convenience in operating various control terminals, which are connected to a large scale computer system and carry out control operations. Moreover, as PCs (Personal Computers) are rapidly and more widely supplied, the users of the PCs can share various information over the Internet and also request an individualized user interface.

The PC can change the configuration of an animated character of an avatar concept on the basis of a user's taste through a current Internet system. The term "avatar" was derived from Sanskrit for "incarnation of a god" and is a combination of the Sanskrit word "ava" meaning "descent" and "terr", meaning "earth". The above-described avatar is popularized as an incarnation of a user on the Internet.

On the other hand, mobile communication terminals were developed for voice communications so that they can perform wireless voice communications. With the development of mobile communication technologies, the development of an SMS (Short Message Service) and a "1xEV-DO" system for a high data rate are proceeding rapidly. The standardization of a "1xEV-DV" system capable of providing one user with multiple services through multiple channels is now under way. The reason for the standardization and development of various services provided to mobile communication terminals and mobile communication systems is because users desire to use a greater variety of services.

The mobile communication terminals have developed to an advanced form from the simple communication terminals at the time of the initial development. There are various types of mobile communication terminals including, for example, a cellular phone, a PCS (Personal Communication Service) phone and a PDA (Personal Digital Assistant). The mobile communication terminal is configured to provide quick dialing based on an assigned number according to a telephone number storage function, and also receiving various information and various services over the Internet.

The users of the mobile communication terminals desire to use various user interfaces. That is, a method for changing and displaying a user's personality is needed. However, the current mobile communication terminal displays a current state of the terminal to a user through various icons in addition to numerals, Korean characters, English letters, special characters, etc., enables the user to input keys or a message consisting of Korean characters, English letters and special characters for short message transmission, provides icons of various menu options, and provides an initial screen and a termination screen containing a particular picture such as a moving picture or still picture.

WO 01/61443 discloses a mobile telephone with an improved man machine interface.

Since such a picture is restrictedly used, it cannot satisfy all of a user's needs. Moreover, where the still picture or moving picture is displayed, it cannot be readily changed. For this reason, there is a disadvantage in that, if the user once sets a screen or image in the mobile communication terminal, the set screen or image cannot be readily changed.

Therefore, it is the object of the present invention to provide an apparatus and method for displaying various user interfaces, which can readily be changed in a mobile communication terminal.

This object is solved by the subject matters of the independent claims.

Preferred embodiments are defined in the dependent claims.

In accordance with one aspect of the present invention, an apparatus is provided for configuring and displaying a user interface in a mobile communication terminal including a display unit for displaying letters, symbols and picture data, comprising a memory including at least two layers having data display areas and data transparently processed in other areas except for the data display areas; and a controller for reading pieces of data from the different layers, combining the data pieces, configuring shape data, and controlling the display unit to display the shape data.

Preferably, the memory may further include a storage area for storing pieces of the shape data configured by the combination of the respective layers, and a storage area for storing data pieces mapped to the shape data corresponding to each menu provided as the user interface.

Preferably, the controller may carry out a corresponding menu function in response to a user's selection of the shape data, read the shape data from the storage area storing the data pieces mapped to the shape data, and display the shape data at the time of a display of a predetermined menu. Preferably, the controller may further configure transmission request data in the form of a message and control transmission of the message through a radio channel, when transmission of the layer data or the shape data is requested. Preferably, the controller may classify received data layer by layer and control a process for storing the classified data in an empty storage area layer by layer, when the layer data or the shape data is requested.

Preferably, the transmitted message may include layer indication information and layer data.

In accordance with another aspect of the present invention, there is provided a method for configuring and displaying a user interface in a mobile communication terminal including a display unit for displaying letters, symbols and picture data, and a memory including at least two layers having data display areas and data transparently processed in other areas except for the data display areas, comprising the steps of a) reading pieces of data from different layers of the memory to configure a predetermined shape; b) combining the data pieces of the layers and configuring shape data; c) displaying the shape data on the display unit; d) storing pieces of shape data generated by combining the data pieces of the layers; e) storing each shape data piece so that it can correspond to each menu provided as a user interface in the mobile communication terminal; and f) reading and displaying the stored shape data when a display of the user interface mapped to the shape data is requested.

Preferably, the method may comprise the steps of: h) configuring transmission request data in the form of a message and transmitting the message through a radio channel, when transmission of the layer data or the shape data is requested; and i) classifying received data layer by layer and storing the classified data in an empty storage area layer by layer, when the layer data or the shape data is requested.

The above features and other advantages of the present invention will be more clearly understood from the following detailed description taken in conjunction with the accompanying drawings, in which:
Fig. 1 is a block diagram illustrating a mobile communication terminal to which the present invention is applied;
Fig. 2 is a flow chart illustrating the generation of an avatar in a user interface in accordance with an embodiment of the present invention;
Fig. 3A is a view illustrating a layout of divided display areas contained in a display area of a display unit in accordance with an embodiment of the present invention;
Fig. 3B is a view illustrating display areas of respective layers for an avatar configuration in accordance with the present invention;
Fig. 3C is a view illustrating combined data pieces of respective layers to configure one avatar;
Fig. 4 is a flow chart illustrating the downloading of data to configure an avatar in accordance with an embodiment of the present invention; and
Fig. 5 is a flow chart illustrating changing an avatar of a user interface in accordance with an embodiment of the present invention.

Now, preferred embodiments of the present invention will be described in detail with reference to the annexed drawings. In the drawings, the same or similar elements are denoted by the same reference numerals even though they are depicted in different drawings.

Further, in the following description of the present invention, specific messages or signals will be described. However, those skilled in the art will appreciate that the specific messages or signals are for only illustrative purposes only as the present invention can be implemented with many variations. A detailed description of known functions and configurations incorporated herein will be omitted when they may obscure the subject matter of the present invention.

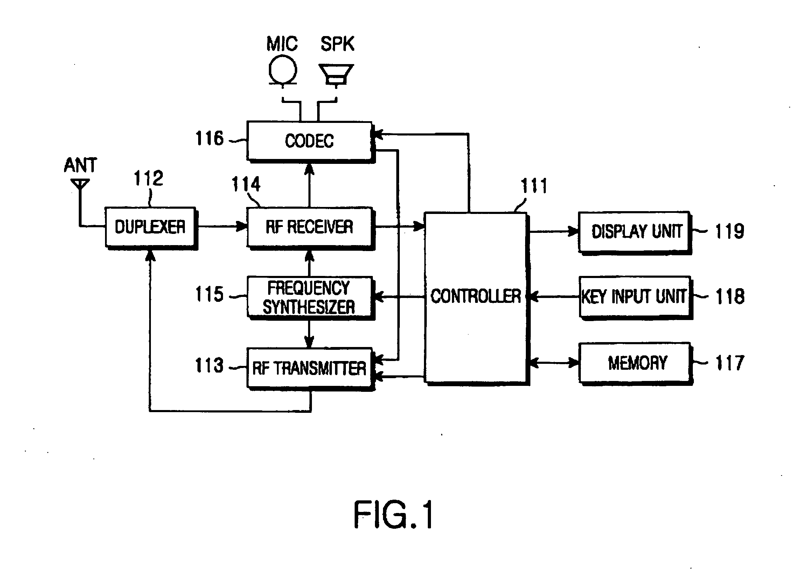

Fig. 1 is a block diagram illustrating a mobile communication terminal to which the present invention is applied. An internal block configuration of the mobile communication terminal and operations of its elements will be described in detail with reference to Fig. 1.

A controller 111 carries out an entire control operation of the mobile communication terminal. In particular, the controller 111 controls memory storage of respective components of an avatar in user interfaces, and controls the downloading of the respective components of the avatar and the generation of the avatar. Moreover, the controller 111 controls the display of the generated avatar. A display control procedure based on the storage, generation and downloading of the respective components of the avatar will be described in detail with reference to the flow charts to be described.

A duplexer 112 outputs an RF (Radio Frequency) signal received from an antenna (ANT) to an RF receiver 114, and outputs a signal received from an RF transmitter 113 to the ANT. The RF receiver 114 converts an RF signal having a predetermined frequency received from a frequency synthesizer 115 into an IF (Intermediate Frequency) signal, and then converts the IF signal into a baseband signal. The RF receiver 114 outputs the baseband signal to a codec 116 and the controller 111. The baseband signal is decoded in the codec 116 by a protocol decoding method of a communication system. The decoded signal is converted into an electrical voice signal as an audible indication, and the voice signal is outputted through a speaker (SPK) so that a user can listen to the voice signal.

A microphone (MIC) converts the voice signal into an electrical signal to output the electrical signal to the codec 116. On the basis of a protocol coding method of the communication system, the codec 116 codes the electrical signal to output the coded signal to the RF transmitter 113. The RF transmitter 113 converts a signal, inputted from the frequency synthesizer 113, into a transmission band signal, and then outputs the transmission band signal to the duplexer 112. Thus, the duplexer 112 transmits the transmission band signal to the ANT so that the voice signal transmission can be made. A signal by signalling is generated in the controller 111 to be transmitted by the RF transmitter 113. The controller 111 receives a signal for signalling through the RF receiver 114.

A group, including the ANT, the duplexer 112, the RF transmitter 113, the RF receiver 114 and the frequency synthesizer 115, is referred to as a RF module.

A memory 117 is composed of a ROM (Read Only Memory), a RAM (Random Access Memory), etc., and includes an area for storing data needed when the controller 111 performs a control operation, an area for storing user data, an area for temporarily storing data generated at the time of the control operation, etc. That is, the memory 117 can be randomly accessed, and is a readable and writable memory. Moreover, the area for storing data needed at the time of the control operation in the memory 117 stores control data in accordance with the present invention. The control data will be described in detail with reference to a flow chart relating to a control operation to be described. Furthermore, the memory 117 includes an area for storing data of respective components of the avatar of the present invention in the user interfaces, and an area for storing the generated avatar. Storage areas for storing a plurality of items, associated with a style for the components of the avatar, on a category basis are shown in the following blank Table 1 in accordance with the embodiment of the present invention.

**Table 1**

| Category | First storage area | Second storage area | ... |
|---|---|---|---|
| Face style layer | | | |
| Pants style layer | | | |
| Jacket style layer | | | |
| Hair style layer | | | |
| Accessory style layer | | | |

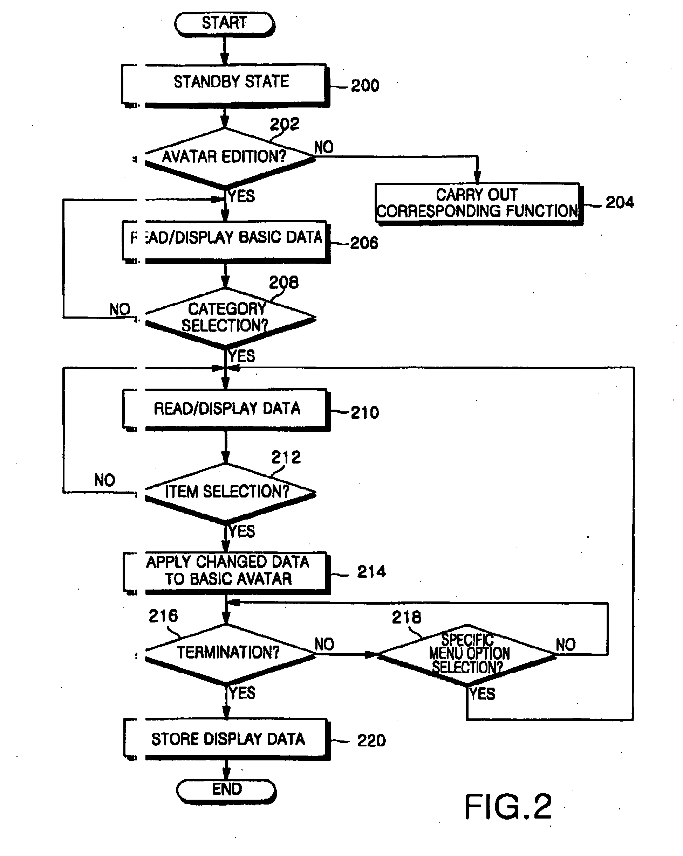

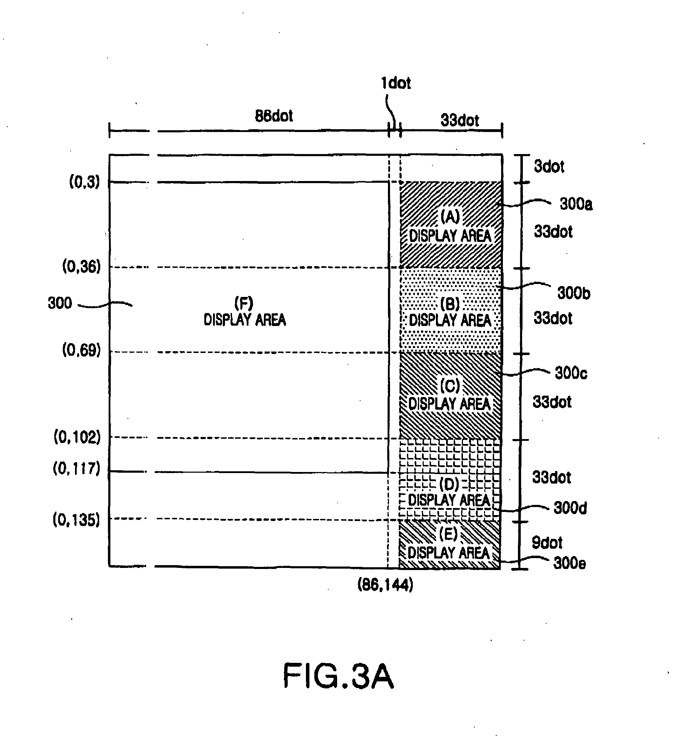

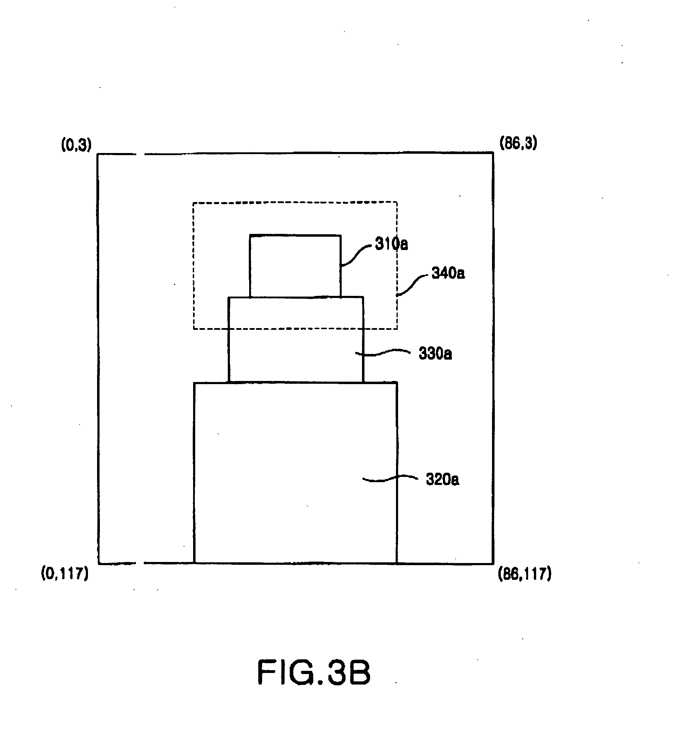

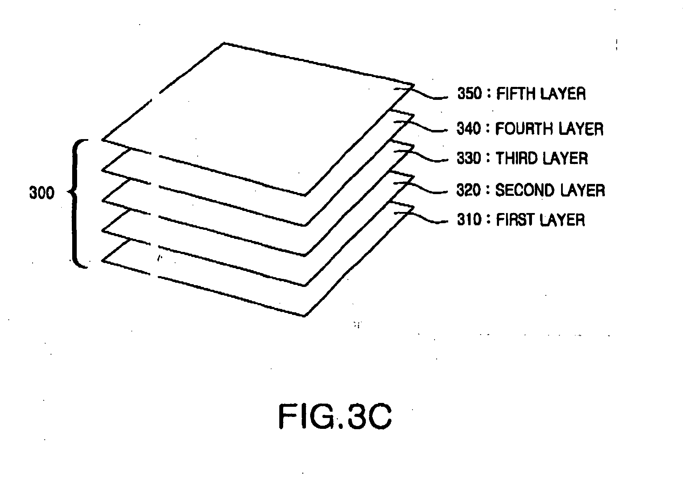

Each storage area shown in the above Table 1 has a predetermined address. Further, data stored in each storage area is data indicating specific locations in which components of the avatar are stored. The respective storage areas have corresponding coordinate values. Same portions, i.e., same face portions or same pants portions can have same coordinate values or different coordinate values. The data stored in the respective storage areas shown in Table 1 is associated with layers. This will be described in detail with reference to Figs. 2 and 3.

One avatar is generated using values stored on the basis of coordinate values, and the generated avatar is stored. A method for storing the generated avatar is divided into two methods. For example, a first method is the case where respective layers for each avatar have addresses of the storage areas in the memory. A second method is to store data itself in the storage areas. These methods will be described in detail with reference to the following Table 2 and Table 3.

**Table 2**

| Category | First avatar | Second avatar | ... |
|---|---|---|---|
| Face style layer | First storage area address | Second storage area address | ... |
| Pants style layer | Second storage area address | Third storage area address | ... |
| Jacket style layer | Third storage area address | First storage area address | ... |
| Hair style layer | Second storage area address | Fourth storage area address | ... |
| Accessory style layer | - | Second storage area address | ... |

The above Table 2 is associated with the first avatar storage method being a method for storing addresses of storage areas. There is an advantage in that the first avatar storage method decreases memory-use capacity. However, there is a disadvantage in that a preset avatar is changed if data of a corresponding storage area is changed. The first avatar storage method can be appropriately applied according to memory capacity.

**Table 3**

| Category | First avatar | Second avatar | ... |
|---|---|---|---|
| Face style layer | First storage area data | Second storage area data | ... |
| Pants style layer | Second storage area data | Third storage area data | ... |
| Jacket style layer | Third storage area data | First storage area data | ... |
| Hair style layer | Second storage area data | Fourth storage area data | ... |
| Accessory style layer | - | Second storage area data | ... |

The above Table 3 is associated with the second avatar storage method being a method for storing data in the storage areas. There is a disadvantage in that the second avatar storage method increases memory-use capacity. However, there is an advantage in that a preset avatar is not changed even though data of a corresponding storage area is changed. The second avatar storage method can be appropriately applied according to memory capacity.

A key input unit 118 conventionally has a structure of a key matrix, and is made up of numeric keys for dialing, function keys for performing various functions, etc. The key input unit 118 generates key data corresponding to keys inputted from the user to output the generated key data to the controller 111. The key input unit 118 of the present invention can include at least one special function key for configuring and changing the avatar for the user interface, and the avatar configuration and change can be implemented through other function key. Moreover, the key input unit 118 includes keys for shifting a menu of the avatar up/down and/or left/right, a selection key for selection, etc.

A display unit 119 can be implemented by a display device such as an LCD (Liquid Crystal Display). The display unit 119 displays a configuration state, etc. while configuring the avatar of the present invention, and displays characters, icons, etc. as in a conventional mobile communication terminal. Further, although not separately shown, the mobile communication terminal can further include a vibration motor, an alarm lamp for indicating an alarm, etc.

Fig. 2 is a flow chart illustrating a control operation at the time of generating an avatar in user interfaces in accordance with an embodiment of the present invention. The control operation at the time of the avatar generation of the present invention will be described in detail with reference to Fig. 2.

As shown in Fig. 2, the controller 111 maintains a standby state at step 200. Here, the standby state means a state when the controller 111 waits for a key input of the user, reception of a call signal by signaling, etc. If a predetermined event is generated while the controller 111 maintains the standby state, the controller 111 proceeds to step 202 to determine whether avatar edition is requested. Fig. 2 explains only a part associated with the avatar edition for the user interface in accordance with the present invention. In other cases except where the avatar edition is requested, the controller 111 proceeds to step 204 to carry out a corresponding function.

The determination of the avatar edition request is made differently on the basis of keys contained in the key input unit 118. Where the key input unit 118 includes a separate key for the avatar edition, the controller 111 determines whether the separate key is inputted. Otherwise, where the avatar edition is set as one option of a menu, the avatar edition is requested where a key for the avatar edition is selected. The present invention can employ any of the two cases, but others, such as voice control, are also contemplated.

If the avatar edition is requested at the above step 202, the controller 111 proceeds to step 206 so that basic data stored in the memory 117 is read and the display unit 119 displays the read data. A display area displayed in the display unit 119 will be described with reference to Fig. 3A. In Fig. 3A, divided display areas of the display unit 119 in accordance with the present invention are shown. The display unit 119 in accordance with the embodiment of the present invention is configured by 120 dots in width and 144 dots in length. Coordinate values are shown on the display areas. The coordinate values can be different from the example shown in Fig. 3A. In the divided display areas, (A) to (E) display areas 300a to 330e display sub-menus. The (F) display area 300 displays the avatar being the user interface. An area below the (F) display area 300 is an area for informing a user of a selected function, and can display a text or word balloon.

At first, the case where the avatar is configured using the basic data will be described with reference to the above Table 1. Five style layers exist in the above Table 1. That is, there are the face style layer, the pants style layer, the jacket style layer, the hair style layer and the accessory style layer in the above Table 1. Pieces of data associated with the above-described layers stored in the first storage area are read so that the avatar is configured and the configured avatar is displayed on the display unit 119. That is, the pieces of data stored in the first storage area are used as the basic data to configure the avatar. Otherwise, the present invention includes a separate area for storing predetermined basic data to display the basic data. A method for configuring the avatar will be described in detail.

Again referring to Fig. 2, the controller 111 displays the basic data at step 206, displays the basic data on the (F) display area 300 shown in Fig. 3A, and displays respective style layers on the (A) to (E) display areas 300a to 300e. Further, the controller 111 shifts and displays a display area of a style layer shown in the above Table 1 when the user inputs an up/down shift key or a left/right shift key. This will be described through an example. Where the five layers can be displayed on the display unit 119 as shown in Fig. 3A, the display unit 119 indicates that each menu to be selected has been prepared using a shadow or embossment indication so that a first layer can be selected. The shadow or embossment indication is displayed and can be moved. However, where display of other layers except for the display areas displayed on the display unit 119 is requested, a corresponding layer is displayed and can be selected. This will be described as an example with reference to Fig. 3A. It is assumed that the five layers are a first layer, a second layer, a third layer, a fourth layer and a fifth layer, and the five layers are configured to be displayed. However, there may be the case where the (D) display area 300d and (E) display area 300e cannot be displayed in relation to the layers. At this time, if a previous layer of the first layer is requested, the display unit 119 shifts to the fifth layer to be displayed. Further, if a next layer is requested at a state in which the third layer is displayed, the fourth layer is displayed. Through this method, the respective layers are displayed.

At the above step 206, the controller 111 enables the display unit 119 to carry out a corresponding display when the user inputs the up/down shift key or the left/right shift key. The controller 111 then proceeds to step 208, and determines whether a selection key of a specific category among the displayed layers is inputted. If the selection key of the specific category is inputted as a result of the determination, the controller 111 proceeds to step 210 in order to enable the display unit 119 to display a plurality of pieces of item data corresponding to the read specific category. The controller 111 then enables the display unit 119 to perform a corresponding display if the up/down shift key or the left/right shift key is inputted. The display unit 119 displays the stored data relating to the layers shown in the above Table 1, and performs a shift. That is, corresponding components of a selectable avatar are displayed on the (A) to (E) display areas 300a to 300e of Fig. 3A. If the first layer is selected and data of a face is stored, the display unit 119 displays displayable data pieces of items corresponding to the face from the stored data.

Then, if the up/down shift key or the left/right shift key is inputted from the key input unit 118, the stored data pieces are sequentially displayed on the display areas for the layers. The controller 111 enables the display unit 119 to carry out the above-described display, and proceeds to step 212 to determine whether the selection key of a specific item is inputted. In Fig. 2, categories can represent several style areas such as a face style area, a trousers style area, an upper garment style area, etc. Data can be stored in each style area. Only one style can be displayed on the display unit in steps 206 and 208. Steps 206 and 208 illustrates that a specific style area is selected by key input by moving up, down, left, or/and right, and the data of the specific style is displayed on the display unit in the step 210. If a key input is detected by moving up, down, left, or/and right, as step 206, other data in the selected style area are scrolled and displayed. In the step 212, it is determined whether or not specific data in a style area currently displayed is selected by a key input from a key input unit. If the selection key is inputted as a result of the determination, the controller 111 proceeds to step 214. The controller 111 applies the selected data to the basic avatar displayed at the above step 206, and enables the display unit 119 to carry out a corresponding display. Thus, the selected data applied to the (F) display area 300 is displayed, and hence the respective layers configure one avatar as shown in Fig. 3C. This will be described with reference to Figs. 3B and 3C.

Fig. 3B is a view illustrating display areas of respective layers for an avatar configuration in accordance with the present invention; and Fig. 3C is a view illustrating the case where data pieces of respective layers are combined to configure one avatar. That is, data pieces of the respective layers 310, 320, 330, 340 and 350 are combined in the (F) display area 300 of Fig. 3A to configure the one avatar. Further, pieces of display data of the respective layers are in only the display areas shown in Fig. 3B, and other display areas become transparent display areas.

That is, since the first layer 310 of Fig. 3C is the face style layer shown in the above Table 1, display data for the face style layer exists in only the display area 310a shown in Fig. 3b and other areas are transparently processed. Further, since the second layer 320 of Fig. 3C is the pants style layer shown in the above Table 1, display data for the pants style layer exists in only the display area 320a shown in Fig. 3B and other areas are transparently processed. Further, since the third layer 330 of Fig. 3C is the jacket style layer shown in the above Table 1, display data for the jacket style layer exists in only the display area 330a shown in Fig. 3B and other areas are transparently processed. Further, since the fourth layer 340 of Fig. 3C is the hair style layer shown in the above Table 1, display data for the hair style layer exists in only the display area 340a shown in Fig. 3B and other areas are transparently processed. Furthermore, the accessory layer of the above Table 1 not shown in Fig. 3B can be placed in any location in the (F) display area 300 of Fig. 3A. As described above, respective display areas have locations and sizes, and other areas are transparently processed. If the respective layers are overlapped as shown in Fig. 3C, one avatar can be configured.

The avatar configured as described above is displayed in the (F) display area 300 of Fig. 3A on the display unit 119. A next procedure will be described with reference to Fig. 2. The controller 111 enables the display unit 119 to carry out the display after applying the changed data to the basic avatar at the above step 214, and proceeds to step 216. If the controller 111 proceeds to the above step 216, it is determined whether a termination key is inputted from the key input unit 118. If the termination key is inputted as a result of the determination, the controller 111 proceeds to step 220 to store the data displayed at the above step 214 in the avatar storage area shown in the above Table 2 or Table 3, and then terminates the procedure.

On the other hand, if the termination key is not inputted from the key input unit 118 as a result of the determination at the above step 216, the controller 111 proceeds to step 218 and determines whether a key for requesting selection of a category corresponding to an avatar layer displayed along with the avatar is inputted. If the key for requesting the selection of the category corresponding to the avatar layer is inputted, the controller 111 proceeds to the above step 210 to repeat the above-described procedure. If the termination key is not inputted and a key for requesting selection of a menu corresponding to a specific avatar layer is not inputted, the controller 111 enables the display unit 119 to carry out a corresponding display based on a key input. That is, if the up/down shift key or the left/right shift key is inputted, the controller 111 performs a corresponding shift. Other functions except for the above-described selections can be performed.

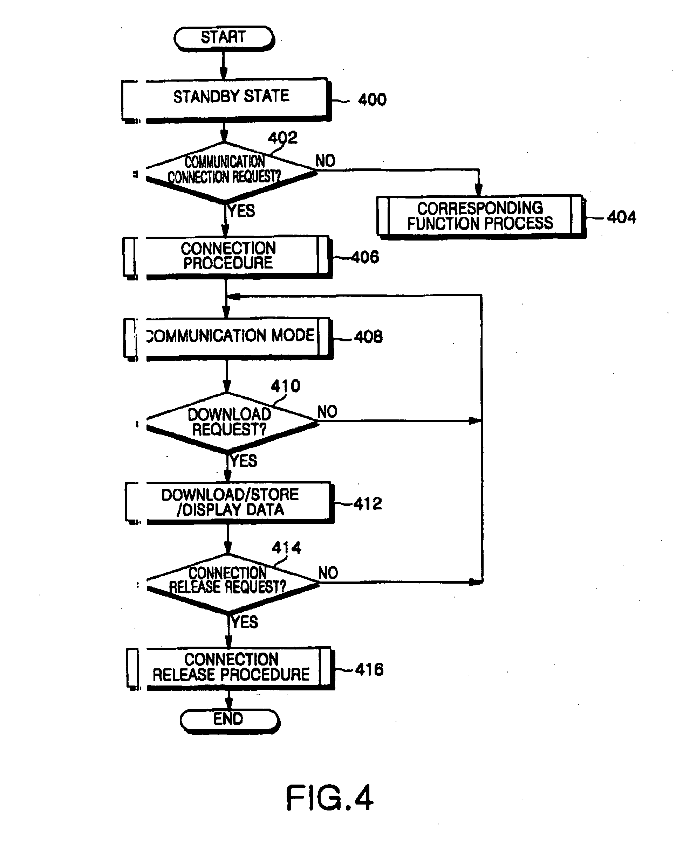

Fig. 4 is a view illustrating a control operation when a mobile communication terminal downloads data to configure an avatar in accordance with an embodiment of the present invention. The control operation at the time of the download of the mobile communication terminal for configuring an avatar will be described with reference to Figs. 1 to 4.

The controller 111 maintains a standby state at step 400. The standby state is the same as that described in relation to the flow chart of the control operation of Fig. 2. If an event is generated while the controller 111 maintains the standby state, the controller 111 proceeds to step 402 and then determines whether an event for requesting a communication network connection for data download associated with the avatar is generated. If the event for requesting the communication network connection for data download associated with the avatar is generated as a result of the determination, the controller 111 proceeds to step 406. Otherwise, the controller 111 proceeds to step 404 in order to carry out a corresponding function. The case where data for configuring the avatar is downloaded is considered in the embodiment of the present invention, and a detailed description of another case will be omitted.

If the controller 111 proceeds to the above step 406, a procedure of the communication network connection for the data download of the avatar is carried out. For example, the controller 111 transmits a connection request signal to a base station for a connection with a specific server of a predetermined communication network, e.g., an Internet network. If a channel is allocated after a mobile communication network authenticates a call, the controller 111 proceeds to step 408 to perform a communication mode. Here, the communication mode means an operating mode when the mobile communication terminal communicates data with the specific server of the Internet network through the mobile communication network.

The controller 111 performs the communication mode at the above step 408, and proceeds to step 410 to determine whether the download is requested. If the download is requested as a result of the determination, the controller 111 proceeds to step 412. Otherwise, the controller 111 continuously performs the communication mode at the above step 408. If the download is requested, the controller 111 performs the data download, stores the downloaded data and enables the display unit 119 to display the downloaded data at the above step 412. The data download can be performed through various methods.

The various methods include a first case where one avatar with its components combined as shown in Fig. 3C is downloaded, a second case where only data corresponding to each layer of the avatar as shown in Fig. 3B is downloaded, and a third case where avatar data not divided into the respective layers is downloaded at one time.

The first case can employ two data storage methods. A first data storage method will be described. The data pieces of the one complete avatar are classified into data pieces of the respective layers, and the data pieces of the respective layers are sequentially received. The received data pieces are stored in the data storage areas shown in the above Table 3. A second storage method stores the data pieces as shown in the above Table 2. Thus, the data pieces corresponding to the respective layers are sequentially received, and the data pieces of the respective layers are stored in an empty storage area shown in the above Table 1. The storage areas of the above Table 1 in which the respective layers are stored are read and the respective layers are combined, thereby configuring one complete avatar.

A description will be given of the second case where only data corresponding to each layer of the avatar as shown in Fig. 3B is downloaded. Where the data pieces of the respective layers are received, the data pieces are stored in the storage areas shown in the above Table 2. To receive the data pieces of the respective layers and store the data pieces in corresponding storage areas as described above, a corresponding layer should be indicated in a data format. Accordingly, the data shown in the following Table 4 is received or the user should set a reception area. A format having a predetermined layer data will be described with reference to the following Table 4.

**Table 4**

| | |
|---|---|
| Layer indication information | Layer data |

The connected Internet server should provide data shown in the above Table 4, and the mobile communication terminal determines the received layer data on the basis of a predetermined protocol and stores the received data in a corresponding storage area. Where there are the five layers as shown in the above Table 1, the layer indication information should have at least three bits. That is, bit data corresponding to the first layer 310 is implemented as "000", bit data corresponding to the second layer 320 is implemented as "001", bit data corresponding to the third layer 330 is implemented as "010", bit data corresponding to the fourth layer 340 is implemented as "011", and bit data corresponding to the fifth layer 350 is implemented as "100". As described above, the layer data is classified by the layer indication information and stored in the corresponding storage area.

Finally, a description will be given of the third case where avatar data not divided into the respective layers is downloaded at one time. The third case is to download one complete avatar, which is conventionally employed in a current Internet communication. Thus, the one complete avatar is downloaded and stored as it is. At this time, the avatar can be divided on a layer basis as shown in Fig. 3B and divided data pieces can be stored. Where the divided data pieces are stored, the data pieces are stored in corresponding storage areas. The data pieces can be stored as shown in the above Table 2 or Table 3.

However, where the data cannot be divided, e.g., display data exists outside of a display area of each layer, the avatar is received and stored as one data piece.

Again referring to Fig. 4, the controller 111 receives the data and stores the data in the memory 117 at the above step 412. The controller 111 proceeds to step 414 to determine whether a key for requesting a connection release is inputted from the key input unit 118. If the key for requesting the connection release is inputted from the key input unit 118, the controller 111 proceeds to step 416. Otherwise, the controller 111 proceeds to the above step 408 to continuously carry out the communication mode. Through the above-described method, specific layer data of various avatars or an avatar can be received.

If the controller 111 proceeds to the above step 416 where the connection release is requested, the signal processing based on the connection release is performed, and then the routine is terminated.

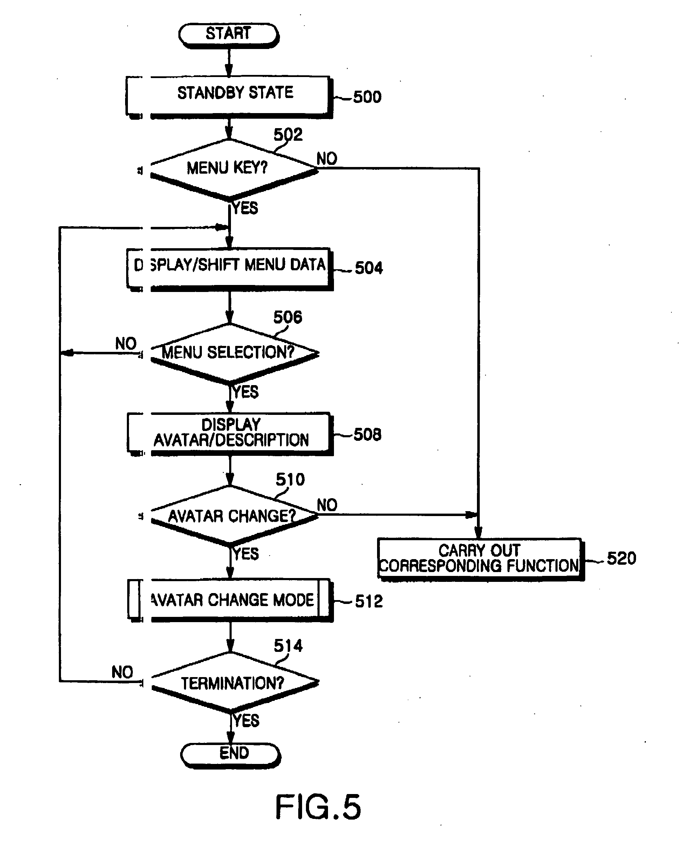

Fig. 5 is a flow chart illustrating a control operation at the time of changing an avatar to a user interface in accordance with an embodiment of the present invention. The control operation at the time of changing the avatar to the user interface will be described in detail with reference to Fig. 5.

Referring to Fig. 5, the controller 111 maintains a standby state at step 500. The standby state is the same as that described in relation to the flow charts of the control operations of Figs. 2 and 4. If a predetermined event is generated while the controller 111 maintains the standby state, the controller 111 proceeds to step 502 to determine whether an event based on an input of a menu key is generated. The controller 111 proceeds to step 504 if the event based on the input of a menu key is generated. Otherwise, the controller 111 proceeds to step 520 to perform a corresponding function. The flow chart of the control operation of Fig. 5 explains a procedure of changing the avatar on a menu key basis. Other functions will not be described.

The controller 111 proceeds to the above step 504, displays menu data and shifts the menu according to a user key input. For example, the menu is displayed in Fig. 3A. That is, a corresponding menu, icon or avatar is displayed in the (F) display area 300 and its description data is displayed below the (F) display area 300. Data corresponding to a first menu is located in the (A) display area. Further, the up/down shift key or the left/right shift key is inputted, the shift is performed in the (A) to (E) display areas 300a to 300e, and hence the menu, icon or avatar is displayed on the (F) display area 300.

The controller 111 performs the shift in response to the up/down shift key or the left/right shift key inputted from the key input unit 118 at the above step 504. The controller 111 then proceeds to step 506 to determine whether a key for requesting selection of the displayed menu is inputted. If the menu selection key is inputted as a result of the determination, the controller 111 proceeds to step 508. Otherwise, the controller 111 continuously performs the above step 504. Here, the case where the termination is requested while the control operation is carried out, will not be described. If the controller 111 proceeds to the above step 508, an avatar of a corresponding menu and its sub-menus are displayed in the display areas shown in Fig. 3A. At this time, the (A) to (E) display areas 300a to 300e display the sub-menus, and the (F) display area displays the avatar of the corresponding menu, an icon or a description. Where an avatar corresponding to each sub-menu exists, it is displayed on the (F) display area 300. However, if the avatar of the sub-menu does not exist, a higher-order avatar of the corresponding sub-menu is displayed on the (F) display area 300.

If a specific request signal is inputted from the key input unit 118 while the menu, the description and the avatar or icon are displayed at the above step 508, the controller 111 proceeds to step 510 to determine whether a signal for requesting change of an avatar is inputted from the key input unit 118. If the avatar change request signal is inputted, the controller 111 proceeds to step 512. Otherwise, the controller 111 proceeds to step 520 to perform a corresponding function.

The controller 111 proceeds to the above step 512 and changes the avatar. In the case where the entire avatars designated as shown in the above Table 2 or Table 3 are changed, the avatars are sequentially read and changed, and registered as icons of menu options. Where the changed avatars mapped to the menu options are stored, they are stored in a memory configured such as the following Table 5 so that the avatars can be changed.

**Table 5**

| | |
|---|---|
| Menu option list | Avatar storage address |
| My portable phone | Third avatar address |
| Avatar editor | Second avatar address |
| Internet connection | Seventh avatar address |
| Telephone number list | Fourth avatar address |
| ... | ... |

As shown in the above Table 5, addresses of avatars associated with the menu list are stored. Thus, a menu option of the list is read and an avatar can be set. If the avatar is changed on a layer basis, a corresponding avatar may not be in the storage area. At this time, a new avatar can be generated as shown in the above Table 2 or Table 3, and the newly generated avatar is stored. The stored avatar can be changed.

The controller 111 performs an avatar change procedure at the above step 512. The controller 111 determines whether a termination request signal is received in step 514. If the termination request signal is received as a result of the determination, the changed avatar is stored in a corresponding storage area of the memory. That is, if the new avatar is generated, it is stored in the form of the above Table 2 or Table 3, and an address of the stored avatar is stored in the above Table 5. Through the above-described procedure, the avatar can be changed.

Further, an avatar and layer data pieces configuring the avatar stored in the mobile communication terminal can be transmitted in the form of a message to other mobile communication terminal in accordance with the present invention. The layer data can be transmitted in place of a short message of the SMS. At this time, a procedure of selecting an avatar to be transmitted is performed in place of a message input.

Where the avatar is transmitted, the layer data of the avatar can be transmitted using the message form of the above Table 4 in addition to a destination telephone number. Where a special channel is provided to transmit the layer data of the avatar or the complete avatar data, the avatar-related data transmission can be performed while the short message or a voice communication is employed. A channel for the avatar transmission can employ a voice channel, but a separated channel except for the voice channel can be employed.

An avatar as a user interface has been described to represent an icon or description of a menu option in the embodiment of the present invention, but the present invention can be applied to all cases in which a graphic image can be employed as the user interface such as an initial drive screen, a message transmission screen, a message reception screen, etc.

Although the preferred embodiments of the present invention have been disclosed for illustrative purposes, those skilled in the art will appreciate that various modifications, additions and substitutions are possible, without departing from the scope of the invention. Therefore, the present invention is not limited to the above-described embodiments, but the present invention is defined by the claims which follow, along with their full scope of equivalents.

As described above, the mobile communication terminal can employ an avatar associated with layers as a user interface, readily change the user interface, reflect user's personality, and arbitrarily change the user interface to a desired shape at any time.

## Claims

1. An apparatus for configuring and displaying a user interface in a mobile communication terminal including a display unit (119) for displaying letters, symbols and picture data, **characterised by** comprising:
a memory (112) adapted to store a plurality of layers (310, 320, 330, 340, 350) each layer including item data corresponding to respective component images configuring a shape of a selectable avatar and other areas having to be transparent except for an area displaying the item data ; and
a controller (111) adapted to configure shape data by combining respective item data included in a plurality of layers selected by a user among the layers stored in the memory (117), and to control the display unit (119) to display the shape data.

2. The apparatus as set forth in claim 1, wherein the memory (117) further includes a storage area for storing pieces of the shape data configured by the combination of the respective layers.

3. The apparatus as set forth in claim 2, wherein the memory (117) further includes a storage area for storing data pieces mapped to the shape data corresponding to each menu provided on the user interface in a mobile communication terminal.

4. The apparatus as set forth in claim 3, wherein the controller (111) is adapted to carry out a corresponding menu function in response to a user selection of the shape data.

5. The apparatus as set forth in claim 3. wherein the controller (111) is adapted to read the shape data mapped in response to the respective menus from the memory at the time of a display of a predetermined menu in the display unit and to display the predetermined menu with the read shape data.

6. The apparatus as set forth in claim 1, wherein the controller (111) is further adapted to configure download request data in the form of a message and to control download of the message through a radio channel, when download of the layer data or the shape data is requested.

7. The apparatus as set forth in claim 6, wherein the downloaded message includes layer display information and layer data.

8. The apparatus as set forth in claim 7, wherein the controller (111) is adapted to classify downloaded data into each layer and to control a process of storing the classified data layer by layer in an empty storage area, when the layer data or the layer display information is downloaded.

9. A method for configuring and displaying a user interface in a mobile communication terminal including a display unit (119) for displaying letters, symbols and picture data, and a memory (117) adapted to store a plurality of layers, each layer including item data corresponding to respective component images configuring a shape of a selectable avatar, and other areas having to be transparent except for an area displaying the item data, the method comprising the steps of:
a) selecting a plurality of layers a user desires from the layers stored in the memory (117) to configure a predetermined shape;
b) configuring one shape data by combining respective item data included in the plurality of selected layers; and
c) displaying the shape data on the display unit.

10. The method as set forth in claim 9, further comprising the steps of:
d) storing respective shape data generated by combining the respective layers;
e) storing the shape data corresponding to each menu provided as the user interface in the mobile communication terminal; and
f) reading and displaying the stored shape data when a display of the user interface mapped to the shape data is requested.

11. The method as set forth in claim 10, further comprising the step of:
g) carrying out a menu function corresponding to a selected user interface upon selection of the mapped user interface if the user interface is mapped to the shape data.

12. The method as set forth in claim 9, further comprising the step of:
h) configuring download request data in the form of a message and downloading the message through a radio channel, when download of the layer data or the configured shape data is requested.

13. The method as set forth in claim 9, further comprising the step of:
i) classifying downloaded data layer by layer and storing layer by layer the classified data in an empty storage area, when the layer data or the shape data is downloaded.

14. The apparatus as set forth in claim 1, wherein each layer is related to a specific area of the display unit;
and by consecutively reading data in different areas, transparently processing display areas except display areas to display read data, the controller is adapted to consecutively combine the read data of each layer thereby configuring a shape data, and display the shape data on the display unit.

15. The method as set forth in claim 9, wherein each layer is related to a specific area the display unit and data of different areas of data stored in the memory is consecutively read;
display areas in which data does not exist are transparently processed, and;
the processed data is combined into a layer, thereby configuring a shape data.

## Patentansprüche

1. Vorrichtung zum Konfigurieren und Anzeigen einer Benutzerschnittstelle in einem Mobilkommunikations-Endgerät, das eine Anzeigeeinheit (119) zum Anzeigen von Buchstaben, Symbolen und Bilddaten enthält, **dadurch gekennzeichnet, dass** sie umfasst:
einen Speicher (112), der so eingerichtet ist, dass er eine Vielzahl von Schichten (310, 320, 330, 340, 350) speichert, wobei jede Schicht Objekt-Daten, die jeweiligen Einzelbildern entsprechen, die eine Form eines auswählbaren Avatars darstellen, und andere Bereiche enthält, die bis auf einen Bereich, der die Objekt-Daten anzeigt, transparent sein müssen; und
eine Steuereinrichtung (111), die so eingerichtet ist, dass sie Formdaten konfiguriert, indem sie jeweilige Objekt-Daten kombiniert, die in einer Vielzahl von Schichten enthalten sind, die durch einen Benutzer aus den in dem Speicher (117) gespeicherten Schichten ausgewählt werden, und die Anzeigeeinheit (119) so steuert, dass sie die Formdaten anzeigt.

2. Vorrichtung nach Anspruch 1, wobei der Speicher (117) des Weiteren einen Speicherbereich zum Speichern von Elementen der Form-Daten enthält, die durch die Kombination der jeweiligen Schichten konfiguriert werden.

3. Vorrichtung nach Anspruch 2, wobei der Speicher (117) des Weiteren einen Speicherbereich zum Speichern von Datenelementen enthält, die den Formdaten zugeordnet sind, die jedem Menü entsprechen, das auf der Benutzerschnittstelle in einem Mobilkommunikations-Endgerät bereitgestellt wird.

4. Vorrichtung nach Anspruch 3, wobei die Steuereinrichtung (111) so eingerichtet ist, dass sie eine entsprechende Menüfunktion in Reaktion auf eine Benutzerauswahl der Formdaten ausführt.

5. Vorrichtung nach Anspruch 3, wobei die Steuereinrichtung (111) so eingerichtet ist, dass sie die zugeordneten Formdaten in Reaktion auf die jeweiligen Menüs bei einer Anzeige eines vorgegebenen Menüs in der Anzeigeeinheit aus dem Speicher liest und das vorgegebene Menü mit den gelesenen Formdaten anzeigt.

6. Vorrichtung nach Anspruch 1, wobei die Steuereinrichtung (111) des Weiteren so eingerichtet ist, dass sie Herunterlade-Anforderungsdaten in Form einer Nachricht konfiguriert und Herunterladen der Nachricht über einen Funkkanal steuert, wenn Herunterladen der Schicht-Daten oder der Form-Daten angefordert wird.

7. Vorrichtung nach Anspruch 6, wobei die heruntergeladene Nachricht Schicht-Anzeigeinformationen und Schicht-Daten enthält.

8. Vorrichtung nach Anspruch 7, wobei die Steuereinrichtung (111) so eingerichtet ist, dass sie heruntergeladene Daten in jede Schicht sortiert und einen Prozess des Speichers der sortierten Daten Schicht für Schicht in einem leeren Speicherbereich steuert, wenn die Schicht-Daten oder die Schicht-Anzeigeinformationen heruntergeladen sind.

9. Verfahren zum Konfigurieren und Anzeigen einer Benutzerschnittstelle in einem Mobilkommunikations-Endgerät, das eine Anzeigeeinheit (119) zum Anzeigen von Buchstaben, Symbolen und Bilddaten sowie einen Speicher (117) enthält, der so eingerichtet ist, dass er eine Vielzahl von Schichten speichert, wobei jede Schicht Objekt-Daten, die jeweiligen Einzelbildern entsprechen, die eine Form eines auswählbaren Avatars darstellen, und andere Bereiche enthält, die mit Ausnahme eines Bereiches, der die Objekt-Daten anzeigt, transparent sein müssen, wobei das Verfahren die folgenden Schritte umfasst:
a) Auswählen einer Vielzahl von einem Benutzer gewünschter Schichten aus den in dem Speicher (117) gespeicherten Schichten, um eine vorgegebene Form zu konfigurieren;
b) Konfigurieren eines Form-Datenelementes durch Kombinieren jeweiliger Objekt-Daten, die in der Vielzahl ausgewählter Schichten enthalten sind; und
c) Anzeigen der Form-Daten auf der Anzeigeeinheit.

10. Verfahren nach Anspruch 9, das des Weiteren die folgenden Schritte umfasst:
d) Speichern jeweiliger Form-Daten, die durch Kombinieren der jeweiligen Schichten erzeugt werden;
e) Speichern der Form-Daten, die jedem Menü entsprechen, das als die Benutzerschnittstelle in dem Mobilkommunikations-Endgerät bereitgestellt wird; und
f) Lesen und Anzeigen der gespeicherten Form-Daten, wenn eine Anzeige der Benutzerschnittstelle, die den Form-Daten zugeordnet ist, angefordert wird.

11. Verfahren nach Anspruch 10, das des Weiteren den folgenden Schritt umfasst:
g) Ausführen einer Menüfunktion, die einer ausgewählten Benutzerschnittstelle entspricht, nach Auswahl der zugeordneten Benutzerschnittstelle, wenn die Benutzerschnittstelle den Form-Daten zugeordnet ist.

12. Verfahren nach Anspruch 9, das des Weiteren den folgenden Schritt umfasst:
h) Konfigurieren von Herunterlade-Anforderungsdaten in Form einer Nachricht und Herunterladen der Nachricht über einen Funkkanal, wenn Herunterladen der Schicht-Daten oder der konfigurierten Form-Daten angefordert wird.

13. Verfahren nach Anspruch 9, das des Weiteren den folgenden Schritt umfasst:
i) Sortieren heruntergeladener Daten Schicht für Schicht und Speichern der sortierten Daten Schicht für Schicht in einem leeren Speicherbereich, wenn die Schicht-Daten oder die Form-Daten heruntergeladen sind.

14. Vorrichtung nach Anspruch 1, wobei jede Schicht mit einem spezifischen Bereich in der Anzeigeeinheit verbunden ist; und
die Steuereinrichtung so eingerichtet ist, dass sie durch aufeinanderfolgendes Lesen von Daten in verschiedenen Bereichen, transparentes Verarbeiten von Anzeigebereichen mit Ausnahme von Anzeigebereichen zum Anzeigen gelesener Daten die gelesenen Daten jeder Schicht aufeinanderfolgend kombiniert und so Formdaten konfiguriert und die Formdaten auf der Anzeigeeinheit anzeigt.

15. Verfahren nach Anspruch 9, wobei jede Schicht mit einem spezifischen Bereich der Anzeigeeinheit verbunden ist und Daten verschiedener Bereiche in dem Speicher gespeicherter Daten aufeinanderfolgend gelesen werden;
Anzeigebereiche, in denen keine Daten vorhanden sind, transparent verarbeitet werden, und
die verarbeiteten Daten zu einer Schicht kombiniert werden und so Formdaten konfiguriert werden.

## Revendications

1. Appareil pour configurer et afficher une interface utilisateur sur un terminal de communication mobile comprenant une unité d'affichage (119) destinée à afficher des lettres, des symboles et des données d'images, **caractérisé ce qu'**il comprend :
une mémoire (112) conçue pour stocker une pluralité de couches (310, 320, 330, 340, 350), chaque couche comprenant des données élémentaires correspondant à des images constitutives respectives configurant la forme d'un avatar pouvant être sélectionné et d'autres zones devant être transparentes à l'exception d'une zone affichant la donnée élémentaire ; et
une unité de commande (111) conçue pour configurer des données de forme en combinant des données élémentaires respectives contenues dans une pluralité de couches sélectionnées par un utilisateur parmi les couches stockées dans la mémoire (117), et pour commander l'unité d'affichage (119) afin qu'elle affiche les données de forme.

2. Appareil selon la revendication 1, dans lequel la mémoire (117) comprend en outre une zone de stockage pour stocker des éléments de données de forme configurées par la combinaison des couches respectives.

3. Appareil selon la revendication 2, dans lequel la mémoire (117) comprend en outre une zone de stockage pour stocker des éléments de données projetés vers les données de forme correspondant à chaque menu prévu sur l'interface utilisateur d'un terminal de communication mobile.

4. Appareil selon la revendication 3, dans lequel l'unité de commande (111) est conçue pour exécuter une fonction de menu correspondante en réponse à une sélection par l'utilisateur des données de forme.

5. Appareil selon la revendication 3, dans lequel l'unité de commande (111) est conçue pour lire les données de forme projetées en réponse aux menus respectifs depuis la mémoire au moment de l'affichage d'un menu prédéterminé sur l'unité d'affichage et pour afficher le menu prédéterminé avec les données de forme lues.

6. Appareil selon la revendication 1, dans lequel l'unité de commande (111) est en outre conçue pour configurer des données de demande de téléchargement sous la forme d'un message et pour commander le téléchargement du message par l'intermédiaire d'un canal radio, lorsque le téléchargement des données de la couche ou des données de forme est demandé.

7. Appareil selon la revendication 6, dans lequel le message téléchargé comprend des informations d'affichage de couches et des données de couches.

8. Appareil selon la revendication 7, dans lequel l'unité de commande (111) est conçue pour classer des données téléchargées dans chaque couche et pour commander un processus consistant à stocker les données classées couche par couche dans une zone de stockage vide lorsque les données de couches ou les informations d'affichage de couches sont téléchargées.

9. Procédé pour configurer et afficher une interface utilisateur sur un terminal de communication mobile comprenant une unité d'affichage (119) pour afficher des lettres, des symboles et des données d'images, et une mémoire (117) conçue pour stocker une pluralité de couches, chaque couche comportant des données élémentaires correspondant à des images constitutives respectives configurant la forme d'un avatar pouvant être sélectionné et d'autres zones devant être transparentes à l'exception d'une zone affichant les données élémentaires, le procédé comprenant les étapes consistant à :
a) sélectionner une pluralité de couches souhaitées par un utilisateur parmi les couches stockées dans la mémoire (117) pour configurer une forme prédéterminée ;
b) configurer une donnée de forme en combinant des données élémentaires respectives contenues dans la pluralité de couches sélectionnées ; et
c) afficher les données de forme sur l'unité d'affichage.

10. Procédé selon la revendication 9, comprenant en outre les étapes consistant à :
d) stocker des données de forme respectives générées en combinant les couches respectives ;
e) stocker les données de forme correspondant à chaque menu prévu en tant qu'interface utilisateur sur le terminal de communication mobile ; et
f) lire et afficher les données de forme stockées lorsqu'un affichage de l'interface utilisateur projetée sur les données de forme est demandé.

11. Procédé selon la revendication 10, comprenant en outre l'étape consistant à :
g) exécuter une fonction de menu correspondant à une interface utilisateur sélectionnée lors de la sélection de l'interface utilisateur projetée si l'interface utilisateur est projetée sur les données de forme.

12. Procédé selon la revendication 9, comprenant en outre l'étape consistant à :
h) configurer des données de demande de téléchargement sous la forme d'un message et télécharger le message par l'intermédiaire d'un canal radio lorsque le téléchargement des données de couches ou des données de forme configurées est demandé.

13. Procédé selon la revendication 9, comprenant en outre l'étape consistant à :
i) classer les données téléchargées couche par couche et stocker couche par couche les données classées dans une zone de stockage vide lorsque les données de couches ou les données de forme sont téléchargées.

14. Appareil selon la revendication 1, dans lequel chaque couche est liée à une zone spécifique de l'unité d'affichage ;
et en lisant consécutivement les données dans différentes zones et en traitant de façon transparente des zones d'affichage excluant des zones d'affichage permettant d'afficher des données lues, l'unité de commande est conçue pour combiner consécutivement les données lues de chaque couche pour ainsi configurer une donnée de forme et afficher la donnée de forme sur l'unité d'affichage.

15. Procédé selon la revendication 9, dans lequel chaque couche est liée à une zone spécifique de l'unité d'affichage et dans lequel des données de différentes zones de données stockées dans la mémoire sont lues consécutivement ;
des zones d'affichage dans lesquelles il n'existe aucune donnée sont traitées de façon transparente ; et
les données traitées sont combinées en une couche pour ainsi configurer une donnée de forme.
